# EUROPEAN PATENT APPLICATION

(11) **EP 1 906 617 A1**
(43) Date of publication of application: **02.04.2008**
(21) Application number: 06300992.2
(22) Date of filing: 27.09.2006
(51) Int. Cl.: H04L 29/06, H04M 7/00

(54) **Method for a called device to instruct a caller device to establish a communication session with a destination device**

(71) Applicant: GEMPLUS, 13420 Gémenos (FR)
(72) Inventor: Srajan, Ashok, 680643, SINGAPORE (SG)

(57) **Abstract**

A method implemented on a called device for instructing a caller device to establish a session with a destination device is disclosed. The method includes receiving a communication session establishment message from the caller device, wherein the communication session establishment message includes only a partial identifier of the caller device. The method further includes using the partial identifier to obtain an at least more complete identifier by which the caller device can be reached, and instructing the caller device, which is reached using the more complete identifier, to establish the session with the destination device. The called device and the necessary software thereon are also disclosed. A personal token of the called device is also disclosed.

## Description

### TECHNICAL FIELD

This invention relates to a method and a device for establishing a communication session. More particularly, the invention relates to a method and a device for establishing a communication session between a caller device and a destination device when the caller device is establishing a communication session with a called device associated with the destination device.

### BACKGROUND

Currently, it is possible to establish a communication session between two devices operable in different domains or networks. For example, a cross-network voice call can be made from a voice over Internet Protocol (VolP) softphone operable in an IP network to a regular cellular or mobile phone operable in a mobile communication network. If the subscriber of the mobile phone has a VolP softphone, it would be advantageous for the subscriber to be able to receive the call on his/her VolP softphone instead, especially if the charges for the VolP service is lower than that charged by the mobile service provider.

To receive the call using the subsciber's VolP softphone, the subscriber will have to terminate the call to his/her mobile phone and call the caller using his/her VolP phone. The subscriber will need the IP port or Session Initiation Protocol (SIP) identifier of the caller for calling the caller. However, the PSTN, which delivers the incoming call to the mobile phone, does not provide the complete SIP identifier of the caller but a corresponding PSTN number instead. This PSTN number is not the same as the SIP identifier; it may be only a part of the SIP identifier. The subscriber may thus have the difficulty to obtain the complete SIP identifier of the caller for calling the caller from his/her VolP softphone and may end up delaying calling the caller. Such a manner of returning a call is disruptive for both the caller and the subscriber.

Alternatively, the subscriber may pick up the incoming call on his/her mobile phone and provide the caller with the SIP identifier of his/her VolP softphone for the caller to call him/her on. Such a need to make two separate calls by the caller may be cumbersome to the caller.

It is thus desirable to provide a more seamless way to establish mid-call redirection of the call to the subscriber's VolP softphone, if it is available.

### DESCRIPTION OF THE INVENTION

According to one aspect of the invention, there is provided a method that is implemented on a called device for instructing a caller device to establish a communication session with a destination device. The method includes the called device receiving a communication session establishment message from the caller device. This communication session establishment message includes only a partial identifier of the caller device. Such a partial identifier may be the result of identity transformation across the respective networks of the caller and called devices. It is not possible to uniquely identify and address the particular caller device based on this partial identifier. The caller device therefore uses the partial identifier to obtain an at least more complete identifier by which the caller device can be reached. After the more complete identifier is obtained, the called device instructs the caller device to establish the communication session with the destination device.

The at least more complete identifier may or may not be the complete identifier by which the caller device can be reached. The at least more complete identifier should however include sufficient information to uniquely identify the caller device. A node in the network to which the called device belongs may then use this information to generate the complete identifier by which the caller device can be reached.

In some embodiments, the called device instructs the caller device to establish the communication session with the destination device only when activated to do so by a user of the called device. Alternatively, the called device may instruct the caller device to establish the communication session automatically, without any user intervention.

The caller, called and destination devices include, but are not limited to, a fixed line telephone, a mobile phone, a VolP softphone, a computer, a personal digital assistant, or the like. Accordingly, these devices operate on networks including a public switched telephone network (PSTN), a mobile communication network, an Internet protocol (IP) network, etc. The communication session may be a voice or a data communication session. Examples of a data communication session include, but are not limited to, audio streaming, video streaming, video conferencing, Voice Over IP (VOIP) etc. In one specific embodiment of the invention, the called device, and the caller device include a mobile station and a VolP device respectively. In this embodiment, the identity of the caller device includes a Session Initiation Protocol (SIP) identifier.

There are several ways by which the caller device may obtain the at least more complete identifier of the caller device. In one embodiment, the called device may prompt a user to enter, on the called device, additional information for obtaining the more complete identifier. In another embodiment, the called device may obtain the at least more complete identifier of the caller device from data stored in the called device. For example, the called device may look up a phonebook stored therein using the partial identifier to obtain a corresponding more complete identifier or additional information for forming the more complete identifier. Such additional information may be information that can be appended to the partial identifier to form the more complete identifier. In yet another embodiment, the called device may use the partial identifier as a parameter to query a node external to the called device to obtain at least a part of the more complete identifier of the caller device.

According to another aspect of the invention, there is provided a device that functions according to the above-described called device. Generally, the device includes means for receiving from a caller device a communication establishment message which includes a partial identifier of the caller device. The device further includes means for using the partial identifier to obtain an at least more complete identifier by which the caller device can be reached and means for instructing the caller device, which is reached using the more complete identifier, to establish a communication session with a destination device.

According to some embodiments of the device, the means for obtaining an at least more complete identifier may include one of several different means. These different means include, but are not limited to, means for receiving at least a part of the more complete identifier of the caller device from a user, means for obtaining the at least more complete identifier of the caller device from data stored in the device, and means for querying a node external to the device to obtain at least a part of the more complete identifier of the caller device.

According to yet another aspect of the invention, there is provided a personal token that is connected to a device and that includes the same features as the device mentioned above. The personal token may be a smart card, a mass memory card, a universal serial bus (USB) key, a multi-media card (MMC), a secure-digital (SD) card, a universal integrated circuit card (UICC), or any token that supports the means described above. The personal token may for example be a subscriber identity module (SIM) when connected to a device associated with a Global System for Mobile communications (GSM)/General Packet Radio Service (GPRS) network. The personal token may also be for example a Universal Subscriber Identity Module (USIM), a Removable User Identity Module (USIM), an IP Subscriber Identity Module (ISIM), an Extensible Authentication Protocol-Subscriber Identity Module (EAP-SIM) when used in devices that are complaint with the third generation telecommunications (3GPP), UMTS, UTRAN, CDMA 2000 (3GPP2) standards.

According to another aspect of the invention, there is provided a software program having instructions executable by a processor of a called device. The software is for implementing a method on the device for instructing a caller device to establish a communication session with a destination device as described above. Generally, the method includes receiving a communication establishment message from the caller device, wherein the communication session establishment message includes only a partial identifier of the caller device. The method further includes using the partial identifier to obtain an at least more complete identifier by which the caller device can be reached, and instructing the caller device, reached using the more complete identifier, to establish the communication session with the destination device.

Other aspects and advantages of the invention will become apparent from the following detailed description, taken in conjunction with the accompanying drawings, illustrating by way of example the principles of the invention.

### BRIEF DESCRIPTION OF DRAWINGS

The invention will be better understood with reference to the drawings, in which:
Figure 1 is a schematic drawing showing a system including a mobile station operable in a GSM network, and a first and a second VolP softphone operable in an IP network, according to one embodiment of the invention;
Figure 2 is a schematic drawing of the mobile station in Figure 1, the mobile station including a mobile terminal and a subscriber identity module (SIM); and
Figure 3 is a flowchart showing a sequence of steps, according to one method in the system in Figure 1 for establishing a call made from the first VolP softphone to the second VolP softphone when the first VolP softphone establishes a call to the mobile station.

### DETAILED DESCRIPTION OF THE EMBODIMENTS

As shown in the drawings for purposes of illustration, the invention is embodied in a method for a called device to instruct a caller device to establish a communication session with a destination device when the caller device is at least trying to establish a communication session with the called device. Hereafter, an embodiment of the invention will be described wherein a caller VolP softphone establishes a first communication session with a called mobile phone of a callee and is thereby instructed by the caller, via the called mobile phone, to establish a second communication session with a destination VolP softphone belonging to the same callee. However, those skilled in the art should recognize that the method is applicable to other types of communication sessions between two devices operable either on the same network or different networks. Since the cost of VolP services is either free or generally less than that of the mobile phone services, it is advantages for both the callee and the caller to be able to receive an incoming call, destined for the mobile phone, on the destination VolP softphone.

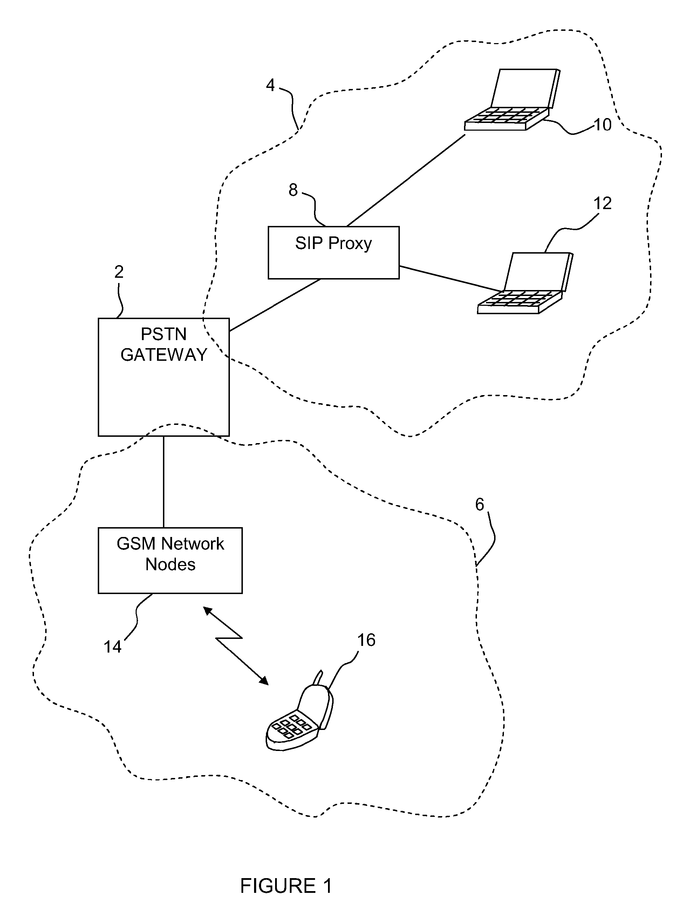

Figure 1 shows two different networks, a first network and a second network, connected to each other via a public switched telephone network (PSTN) gateway 2. The first network is an Internet Protocol (IP) network 4 and the second network is a mobile communication network, such as a Global System for Mobile communications (GSM) network 6. The protocols used on these two networks 4, 6 are different. The IP network 4 includes nodes, such as a Session Initiation Protocol (SIP) proxy 8 and two personal computers running respective applications that enable them to be used as a caller VolP softphone 10 and a destination VoIP softphone 12 respectively.

The GSM network 6 includes network element nodes 14 and a mobile station 16. The network element nodes 14, collectively shown as a single block in Figure 1, include a base station system, a network switching system and a short message service center. The mobile station 16 includes but is not limited to a mobile phone. The base station system provides the radio inter-connection from the mobile station 16 to the network switching system. The network switching system interconnects the GSM network 14 and the PSTN. The network switching system includes other nodes, such as a Mobile Services Switching Centre (MSC), a Home Location Register (HLR) and a Visitor Location Register (VLR) (all not individually shown in Figure 1 but as part of the single block "GSM Network Nodes"). These location registers are database-oriented processing nodes are for managing subscriber data and keeping track of a mobile subscriber's location, more specifically mobile station's location, as it roams around the GSM network 6 and possibly other GSM networks (not shown). That is, the location registers keep track of which MSC and VLR the mobile subscriber is being currently served.

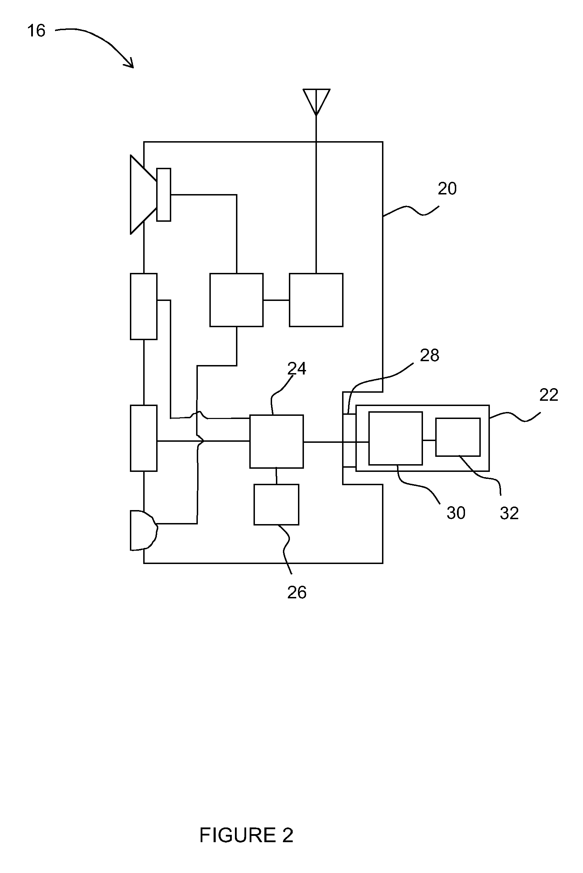

Referring to Figure 2, the mobile station 16 includes a mobile equipment or terminal (ME) 20, and a personal or authentication token in the form of an electronic "smart card" or chip card (equipped with a microprocessor) supported in the mobile terminal 20. This authentication token is known as a subscriber identity module (SIM) 22 when used in a GSM network. The SIM 22 is programmed with a unique International Mobile Subscriber Identity (IMSI). Stored on the mobile terminal 20 is the Session Initiation Protocol (SIP) identifier of the destination VolP softphone 12. The mobile station 16 and the destination VolP softphone 12 belong to the same subscriber (not shown).

The mobile terminal 20 includes a processor 24 and its associated memory 26. The mobile terminal 16 is connected to the removable SIM 22 via electrical contacts 28. The SIM 22 includes a SIM processor 30 and a SIM memory 32. The SIM 22 is used for the storage and retrieval of data items by the processor 24 of the mobile terminal 20. The command set, data file structure and data coding used for data communicated via the interface between the mobile terminal processor 24 and the SIM processor 30 are specified in the 3GPP technical specification 11.11 or ETSI Technical Specification 100.977.

Applications (not shown) are stored on the SIM 22, more specifically in the SIM memory 32. These applications allow interactions between the SIM 22 and the mobile terminal 20. These applications may be supported by the SIM application toolkit or a similar platform. The applications may be developed using a number of computer programming languages, such as C, Java™ or any other proprietary programming language. Typical applications include downloading data and "events" to the SIM 22. Data records are stored in what is known as elementary files in the SIM memory 32. The applications may be stored in the SIM 22 when the SIM 22 is personalized in the factory. Alternatively, the applications may be loaded in the SIM 22 via an over-the-air (OTA) process after the SIM 22 is deployed.

According to the embodiment, a new SIM toolkit application is stored in the SIM memory 32 for implementing a part of the method that is performed on the mobile station 16. Such an application is also known as an applet, or more specifically a cardlet, when implemented on a Java™ card type of SIM. Hereafter, this application will be referred to as an agent application. The SIM processor 30 executes this agent application in a manner that will be described shortly. Stored in the mobile station 16 is a list (not shown) of identifiers, more specifically network identifying numbers, and their corresponding network names.

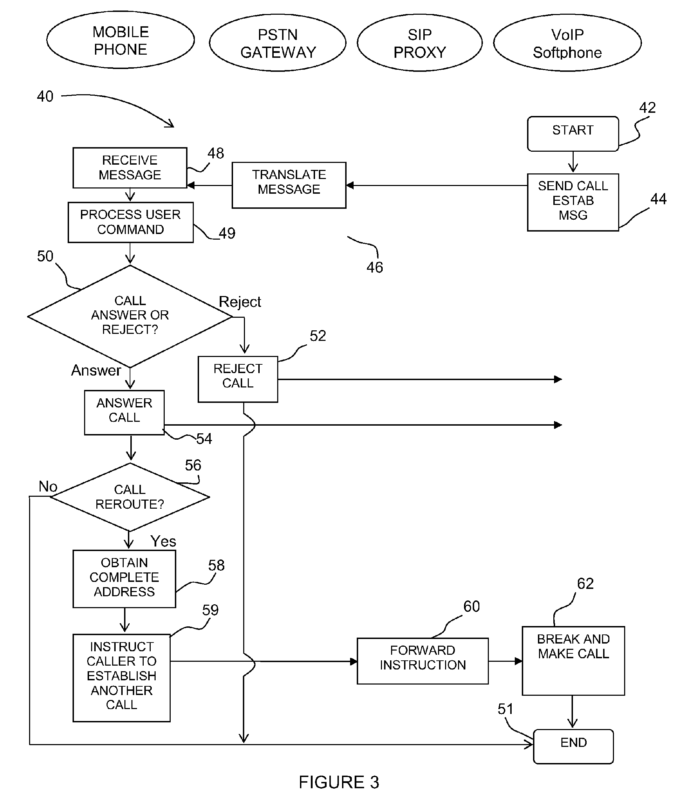

Figure 3 is a flowchart showing a sequence 40 of steps, according to an embodiment, that implements the method described above. The sequence 40 starts in a START step 42 at the caller VolP softphone 10 when the caller initiates a communication session, for example a call, to the mobile station 16. The sequence 40 next proceeds to a SEND CALL ESTABLISHMENT MSG step 44, wherein the caller VolP softphone 10 sends a call establishment message to the mobile station 16 for establishing the call therewith. The message includes the IMSI of the mobile station 16 and the SIP identifier of the caller VolP softphone 10. This SIP identifier may for example be "17476500986@sipphone.com", which is a unique identifier or address by which the caller VolP softphone 10 can be reached. The caller VolP softphone 10 sends the call establishment message, more specifically a SIP User Agent Client (UAC) INVITE request, to the SIP proxy 8. The SIP proxy 8 allocates the necessary resources and creates a session with an allocated session ID thereat.

The SIP proxy 8 then routes the call establishment message to the PSTN gateway 2 according to the SIP protocol known to those skilled in the art. The sequence 40 next proceeds to a TRANSLATE MESSAGE step 46 at the PSTN gateway 2, wherein the PSTN gateway 2 translates the call establishment message received from the IP network 4 into a suitable form for use in the GSM network 6. This translation is based on number translation standards such as the E-164 that specifies the mapping between PSTN numbers and VOIP addresses. According to the number translation standards, the SIP identifier "17476500986@sipphone.com" may be translated into a PSTN number "17476500986". Although this PSTN number is associated with the caller VolP softphone 10, it is incomplete and it is not possible to tell from this PSTN number the originator of the call establishment message. In other words, the PSTN number only partially identifies the caller VolP softphone 10 and cannot be used to reach the caller VolP softphone 10. The PSTN gateway 2 routes the call establishment message, as an incoming call, to the mobile station 16 via the GSM network nodes 14. The mobile station 16 will ring to alert the callee that there is an incoming call.

The sequence 40 next proceeds to a RECEIVE MESSAGE step 48, wherein the mobile station 16 receives the call establishment message and alerts the callee. The sequence 40 next proceeds to a PROCESS USER COMMAND step 49, wherein the mobile station receives and processes a command entered by the callee in response to the incoming call. The sequence 40 next proceeds to a CALL ANSWER OR REJECT? decision step 50, wherein the mobile station 16 checks if the user command is a "reject call" command. If it is determined that the user command is a "reject call" command, the sequence 40 proceeds to a REJECT CALL step 52, wherein the mobile station 16 rejects the incoming call by sending an appropriate REJECT message via the GSM network nodes 14, PSTN gateway 2, SIP proxy 8 to the caller VolP softphone 10. The sequence 40 then ends in an END step 51.

If it is determined in the CALL ANSWER OR REJECT? decision step 50 that the user command is an "answer call" command, the sequence 40 proceeds to an ANSWER CALL step 54, wherein the mobile station 16 accepts the call by sending an appropriate ACKNOWLEDGE message via the GSM network nodes 14, PSTN gateway 2, SIP proxy 8 to the caller VolP softphone 10. At this point, the communication session or call in this embodiment is established between the caller VolP softphone 10 and the called mobile station 16.

The sequence 40 next proceeds to a CALL REROUTE? decision step 56, when the callee activates the agent application resident on the SIM 22, such as by pressing a designated button (not shown) on the mobile terminal 20. The SIM processor 30, through executing the instructions of the agent application, displays a message on a screen of the mobile station 16 asking if the callee would like to reroute the call. If the callee indicates that the callee does not wish to reroute the call, the sequence 40 ends in the END step. If, however, the callee chooses to reroute the call, the sequence 40 proceeds to a OBTAIN COMPLETE ADDRESS step 58, wherein the SIM processor 30 obtains the SIP identifier of the caller VolP softphone 10 using the PSTN number in the call establishment message received earlier. That is, the SIM processor 30 in this embodiment obtains the complete identifier by which the caller VolP softphone 10 can be reached. The SIM processor 30 may use a relevant portion of the PSTN number, for example the network identifying digits "1747" in the "17476500986" PSTN number for looking up the list in the mobile station 16 to obtain the corresponding network name "@sipphone.com". Alternatively, the SIM processor 30 may also retrieve the network name from another list, which may also be stored in the SIM memory 32. This other list has entries, each including a PSTN number and its corresponding network name. When such a list is used, the SIM processor 30 uses the caller's PSTN number to access the entry containing that PSTN number to obtain the corresponding network name. The SIM processor 30 appends this network name that is obtained to the PSTN number to obtain the complete SIP identifier "17476500986@sipphone.com" of the caller VolP softphone 10.

The sequence 40 next proceeds to a INSTRUCT CALLER TO ESTABLISH ANOTHER CALL step 59, wherein the SIM processor 30 sends a reroute command including the SIP identifier of the caller VolP softphone 10 and the SIP identifier of the destination VolP softphone 12 to the SIP proxy 8 of the IP network 4. This reroute command is sent in a request packet as a SIP message over General Packet Radio Service (GPRS). The sequence 40 next proceeds to a FORWARD COMMAND step 60 at the SIP proxy 8, wherein the SIP proxy 8 responds to the reroute command by forwarding the reroute command including the SIP identifier of the destination VolP softphone 12 to the caller VolP softphone 10. The sequence 40 then proceeds to a BREAK AND MAKE CALL step 62 at the caller VolP softphone 10, wherein the caller VolP softphone 10 breaks the call established with the called mobile station 16 and makes another call to, i.e. establishes another communication session with, the destination VolP softphone 12. When the call is accepted at the destination VolP softphone 12 by the callee, the telephone conversation between the caller and the callee can resume.

Advantageously, a mid-conversation redirection of the conversation, which is more seamless and less cumbersome to both the caller and the callee, is achieved.

Although the invention is described with the reroute command being implemented as a SIP message over General Packet Radio Service (GPRS), it is not to be construed to be limited as such. For example, although not ideal, the called mobile station 16 may send the reroute command to the SIP proxy 8 via a short message service (SMS) message or via other means by which the mobile station 16 can communicate with the SIP proxy 8.

As another example, although the called mobile station 16 and the destination VolP softphone 12 are shown and described to be separate devices, it should not be construed to be limited as such. The called device and the destination device may be one and the same device, known as a converged device that supports different standards. Such a device includes a personal computer with a built-in mobile phone. Using the method described above, the receipt of an incoming call may be "switched" between a mobile phone running on the personal computer and the VolP softphone. If the mobile station 16 has the capacity to connect to both the GSM and the IP networks, an incoming call may also be "switched" between the GSM functionality and the IP functionality of the mobile station.

## Claims

1. A method (40) implemented on a called device (16) for instructing a caller device (10) to establish a communication session with a destination device (12), the method (40) comprising:
receiving (48) a communication session establishment message from the caller device (10), the communication session establishment message including only a partial identifier of the caller device (10),
**characterized in that** the method (40) further comprises:
using the partial identifier to obtain (58) an at least more complete identifier by which the caller device (10) can be reached; and
instructing (59) the caller device (10), reached using the more complete identifier, to establish the communication session with the destination device (12).

2. A method (40) according to Claim 1, **characterized in that** using the partial identifier to obtain an at least more complete identifier comprises one of the following:
receiving at least a part of the more complete identifier of the caller device (10) from a user of the called device (16);
obtaining the at least more complete identifier of the caller device (10) from data stored in the called device (16); and
querying a node external to the called device (16) to obtain at least a part of the more complete identifier of the caller device (10).

3. A method (40) according to Claim 1 or Claim 2, **characterized in that** instructing the caller device (10) to establish the communication session with the destination device (12) comprises instructing the caller device (10) when the called device (16) is activated by a user.

4. A method (40) according to any one of the preceding claims, **characterized in that** the communication session comprises one of a voice and a data communication session.

5. A method (40) according to any one of the preceding claims, **characterized in that** the called device (16) and the caller device (10) comprise a mobile station (16) and a VolP device (10) respectively, and **in that** the more complete identifier of the VolP device (10) comprises a SIP identifier.

6. A device (16) comprising means for receiving (48) from a caller device a communication establishment message which includes a partial identifier of the caller device, **characterized in that** the device further comprises:
means for using the partial identifier to obtain (58) an at least more complete identifier by which the caller device (10) can be reached; and
means for instructing (59) the caller device (10), which is reached using the more complete identifier, to establish a communication session with a destination device (12).

7. A device (16) according to Claim 6, **characterized in that** the means for obtaining (58) an at least more complete identifier comprises one of the following:
means for receiving at least a part of the more complete identifier of the caller device from a user;
means for obtaining the at least more complete identifier of the caller device from data stored in the device; and
means for querying a node external to the device to obtain at least a part of the more complete identifier of the caller device.

8. A personal token (22) comprising means for receiving from a caller device a communication establishment message which includes a partial identifier of the caller device (10), **characterized in that** the personal token (22) further comprises:
means for using the partial identifier to obtain (58) an at least more complete identifier by which the caller device (10) can be reached; and
means for instructing (59) the caller device (10), which is reached using the more complete identifier, to establish a communication session with the destination device (12).

9. A software program having instructions executable by a processor of a called device (16) for implementing a method (40) thereon for instructing a caller device (10) to establish a communication session with a destination device (12), the method (40) comprising:
receiving (48) a communication establishment message from the caller device (10), the communication session establishment message including only a partial identifier of the caller device;
**characterized in that** the method (40) further comprises:
using the partial identifier to obtain (58) an at least more complete identifier by which the caller device (10) can be reached; and
instructing (59) the caller device (10), reached using the more complete identifier, to establish the communication session with the destination device (12).
